# EUROPEAN PATENT APPLICATION

(11) **EP 1 241 498 A2**
(43) Date of publication of application: **18.09.2002**
(21) Application number: 02251192.7
(22) Date of filing: 21.02.2002
(51) Int. Cl.: G02B 6/293

(54) **Multiplexer based on arrayed waveguide grating (AWG)**

(30) Priority: 16.03.2001 US 810799
(71) Applicant: Nortel Networks Limited, St. Laurent, Quebec H4S 2A9 (CA)
(72) Inventor: Whiteaway, James E., Sawbridgeworth, Hertfordshire CM21 OAF (GB); Fielding, Alan, Hertfordshire CM23 4DH (GB); Bricheno, Terry, Great Sampford, Essex CB10 2RG (GB)
(74) Representative: Bewley, Ewan Stuart

(57) **Abstract**

An arrayed waveguide grating device has a substrate (1) with an array (41) of waveguides extending across the substrate between an input coupler (37) and an output coupler (39). At least one input waveguide (31) extends between an input end for coupling to an input signal and the input coupler (37) and at least one output waveguide extends between an output end for coupling to an output signal and the output coupler (39). The input end or ends of the at least one input waveguide and the output end or ends of the at least one output waveguide are brought to the same edge (35) of the substrate.

## Description

The invention relates to an arrayed waveguide grating (AWG) and in particular to the geometry of an arrayed waveguide grating.

Optical systems increasingly use wavelength division multiplexing (WDM) in which a number of distinct optical signals are transmitted at different wavelengths, generally down an optical fiber. For example, optical communication in the so called "C" band may use 40 channels, or frequencies, at regular intervals. One optical signal can be transmitted at each frequency down a single optical fiber. There are other possibilities, for example, 56 channels may be used in the "L" band.

A key component in WDM systems is the demultiplexer for splitting apart optical signals at a plurality of wavelengths into the individual channels at individual wavelengths. This may be done using a splitter and a number of different filters tuned to the individual frequencies, by components that demultiplex the light directly, or a different combination of these components.

One approach to filtering and demultiplexing is an arrayed waveguide grating (AWG), also known as a phased-array device. The operation and design of AWGs is described, for example, in "PHASAR-Based WDM-Devices: Principles, Design and Applications", Meint K. Smit, IEEE Journal of Selected Topics in Quantum Electronics, Vol. 2, No. 2, June 1996.

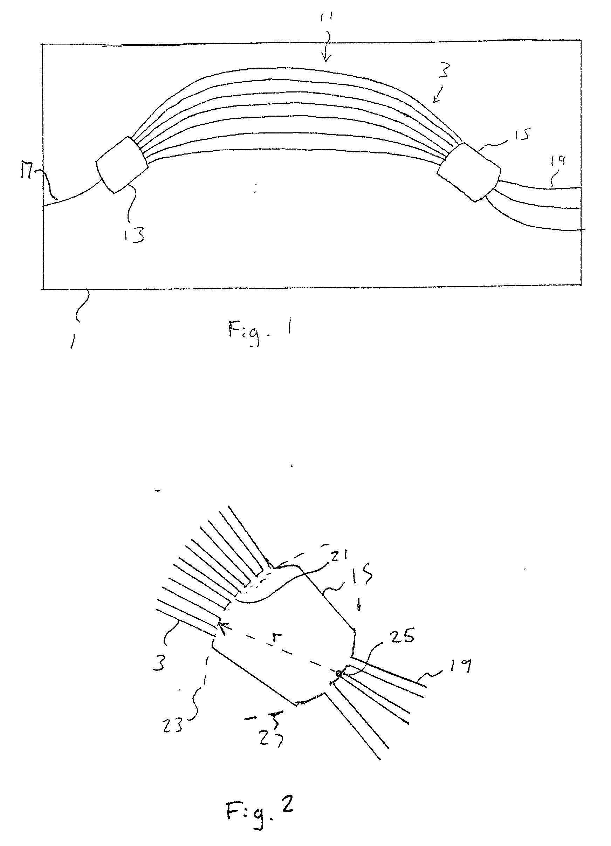

Figure 1 illustrates a conventional AWG device. The arrayed waveguide device includes an array 11 of waveguides 3 arranged side by side on a substrate 1 and extending between an input star coupler 13 and an output star coupler 15. The input and output star couplers 13,15 may be defined by a wide core region in which light can travel freely in the two-dimensional plane of the substrate. This region is known as the free propagation region. Input 17 and output 19 optical waveguides are provided to feed input light into the array 11 of waveguides and to output light respectively. There may in particular be a plurality of input waveguides 17 or output waveguides 19.

As an example Figure 2 illustrates the output star coupler of a system with a single input waveguide and a plurality of output waveguides. The ends 21 of the array of waveguides 11 are usually on a geometric circle 23 of radius r whose centre is at the centre 25 of an image plane 27. The output waveguides 19 are arranged on the image plane, which also constitutes a circle. Note that the centres of the circles are not coincident, and need not have equal radii.

The lengths of the individual waveguides 3 of the array 11 differ (see Figure 1) and the shapes of the star couplers 13, 15 are chosen so that light input on the input optical waveguide 17 passes through the array of waveguides and creates a diffraction pattern on the output waveguide or waveguides, such that light of a predetermined central wavelength creates a central interference peak at the centre 25 of the image plane. Light with frequencies slightly higher or lower than the predetermined central frequency is imaged with a central interference peak slightly above or below the centre of the image plane.

In order to achieve this result the optical path length difference between adjacent waveguides of the array is chosen so that it is an integral multiple of the central wavelength. Accordingly, light at the central wavelength which enters the array of waveguides in phase will also leave in phase and thus will create the central diffraction spot at the centre of the image plane. Light with a slightly different frequency will arrive at the output star coupler with slight phase differences across the array, which will cause the light to be imaged to a spot on the image plane a little away from the central spot.

Accordingly, the plurality of output waveguides arranged on the output plane receive light of slightly different frequencies. Equally spaced output waveguides correspond to equally spaced frequencies, to a first order of approximation.

Figure 2 shows the effect of one or more output waveguides connected to the output star coupler 15. It is alternatively or additionally possible to arrange a plurality of input waveguides on the input star coupler with the same effect.

An AWG filter has a number of properties. One important property is that the distance of the image spot along the image plane as a function of wavelength is substantially linear in wavelength, for wavelengths around the central wavelength. Accordingly, it is possible to separate signals with a given channel separation by positioning output waveguides at substantially regular intervals along the output plane.

A second important property is that the AWG has a repeat frequency. In other words, the interference properties as a function of frequency repeat with a period in the frequency domain. This period is known as the free spectral range (FSR). The free spectral range is a function of the difference in length between adjacent waveguides; a large length difference results in a small FSR and vice versa.

The layout geometry shown in Figure 1 is that normally used in an AWG filter. However, the exact geometry used for the coupler is limited by a number of parameters. One parameter is the minimum radius of curvature of the optical waveguides used. Another is the minimum separation between adjacent optical waveguides. Thirdly, the optical length difference between adjacent optical waveguides is a parameter. The space required for fan out is also relevant - the inputs and outputs have to be sufficiently spaced to be attached to input and output connectors, generally optical fibers. Other parameters include the refractive indices of the core, buffer and cladding.

Although it is normally possible to implement a desired FSR and channel separation using the geometry shown in Figure 1, the geometry is not suitable for small path differences between adjacent waveguides in the array. This is because a waveguide arranged around another waveguide in the geometry of Figure 1 will need to be longer by at least a certain minimum distance in order to fit around the other waveguide. This means that for large FSRs, which require small length differences between adjacent waveguides, the geometry of Figure 1 is not suitable. An alternative geometry, which might be described as an elongate S-shape, is proposed in Adar R, et al, "Broad-band array multiplexers made with silicon waveguides on silicon", Journal of Lightwave Technology, vol. 11, no. 2, February 1993, pages 212 to 218.

Arrayed waveguide gratings are often formed on silicon substrates. A number of gratings are generally patterned on a single wafer; the wafer is then sawn to split the wafer into individual gratings. In view of the high cost of semiconductor wafers, there is a general need to increase the number of individual gratings formed on a single wafer.

Furthermore, a significant part of the cost of manufacturing modules including arrayed waveguide gratings is in attaching input and output optical fibers to the gratings. This generally requires accurate alignment carried out by skilled technicians. It would accordingly be desirable to simplify input and output from an arrayed waveguide grating.

The invention relates to an arrayed waveguide grating (AWG) and in particular to the geometry of an arrayed waveguide grating. It is an object of the invention to overcome disadvantages of the prior art.

According to a first aspect of the invention there is provided an arrayed waveguide grating device comprising: a substrate having a plurality of edges; an array of waveguides extending across the substrate between a first coupler and a second coupler; at least one input/output waveguide extending from the first coupler; at least one input/output waveguide extending from the second coupler; wherein the opposite ends of the input/output waveguides to the first and second couplers are provided on are the same edge of the substrate to act as optical inputs and outputs.

As far as the inventor is aware, all prior art AWG devices take the input and output ends of the input and output waveguides to opposite edges of a rectangular substrate. However, results will be presented later to show that by bringing the input and output waveguides to the same edge of the substrate in accordance with the invention it may unexpectedly be possible to reduce the area of an AWG device. This increases the number of AWG devices that it is possible to make on a single wafer.

Arrayed waveguide gratings are generally formed on substantially flat substrates, the edges being the sides at the perimeter of the substrate.

The ends of the waveguides extending from the first coupler may be arranged to have the same constant spacing as the ends of the waveguides extending from the second coupler.

Furthermore, the provision of optical inputs and outputs at the same edge of the substrate can ease manufacture. The input and output waveguides may be brought together on the said edge of the substrate contiguously so that a single fiber ribbon connector may be brought to the edge for connecting input and outputs in a single operation. In this way, only one optical connection needs to be made instead of two with conventional designs. For devices with many inputs and outputs, these may be brought together on the said edge of the substrate in groups for connection to more than one fibre ribbon connector.

Typically, the substrate may be rectangular.

Electrical connections may be provided on the substrate on a different edge of the substrate to the optical inputs and outputs. The electrical connections may be used, for example, for Peltier effect cooling or temperature sensing on the chip. The provision of electrical and optical connections on different edges makes manufacture particularly easy by separating the electrical and optical connections. Preferably, opposite edges of the substrate may be used.

The array of waveguides may bend on the substrate by more than 180° in order that the input and output waveguides can more readily be brought together.

The invention is particularly useful with small FSRs since the configuration of the array of waveguides tends to produce large path differences between adjacent waveguides which results in small FSRs. Typically, FSRs below 1000GHz may be provided.

In another aspect, the invention relates to a node of an optical telecommunications system comprising an arrayed waveguide grating device including: a substrate having a plurality of edges; an array of waveguides extending across the substrate between a first coupler and a second coupler; at least one input/output waveguide extending from the first coupler; at least one input/output waveguide extending from the output coupler; wherein the opposite ends of the input/output waveguides to the first and second coupler are provided on a common edge of the substrate to constitute optical inputs and outputs.

The ends of the input and output waveguides may be arranged to have the same constant spacing at the edge of the wafer, and a optical fiber ribbon with the same spacing may be connected in registration to the input and output waveguides.

In another aspect, the invention relates to an optical system comprising a plurality of nodes, at least one of the nodes being an optical node having an arrayed waveguide grating on a substrate for which the input and output optical fibers are brought to the same edge.

The invention also relates to a method of demultiplexing optical signals at a plurality of different frequencies, including: inputting an optical signal to at least one optical input arranged on an edge of a substrate; passing the optical signal through an arrayed waveguide grating on the substrate to split the optical signal according to wavelength into a plurality of demultiplexed signals passing along respective output waveguides; and outputting the demultiplexed signals from the plurality of output waveguides through a plurality of optical outputs arranged along the same edge of the substrate as the at least one input.

The invention additionally relates to a method of multiplexing optical signals at a plurality of different frequencies, including: inputting a plurality of optical signals to a plurality of optical inputs arranged on an edge of a substrate; passing the optical signals through an arrayed waveguide grating on the substrate to combine the optical signal according to wavelength into at least one multiplexed signal passing along at least one output waveguide; and outputting the multiplexed signal from the respective output waveguides through at least one optical output arranged along the same edge of the substrate as the plurality of optical inputs.

The invention also relates to a method of filtering an optical signal, including: inputting at least one optical signal to at least one optical input arranged on an edge of a substrate; passing the at least one optical signal through an arrayed waveguide grating on the substrate to filter the at least one optical signal according to wavelength into at least one filtered signal passing along at least one output waveguide; and outputting the at least one filtered signal from the respective output waveguide through an optical output arranged along the same edge of the substrate as the at least one optical input.

The summary of the invention does not necessarily disclose all the features essential for defining the invention; the invention may reside in a sub-combination of the disclosed features.

For a better understanding of the invention specific embodiments will now be described, purely by way of example, with reference to the accompanying drawings in which:
Figure 1 shows a known AWG device;
Figure 2 is a schematic drawing of the output star coupler of the AWG of Figure 1;
Figure 3 is a schematic drawing of a first embodiment of the invention;
Figure 4 illustrates the cross section through a waveguide used in the AWG device of Figure 3;
Figure 5 is a schematic of the wafer layout used in the embodiment of Figure 3;
Figure 6 is a schematic drawing of a comparative example;
Figure 7 is a schematic of the wafer layout of the comparative example;
Figure 8 is a schematic diagram of an optical node incorporating an AWG according to Figure 3; and
Figure 9 is a schematic diagram of an optical system according to the invention.

### Detailed Description

The following description is of preferred embodiments by way of example only and without limitation to the combination of features necessary for carrying the invention into effect.

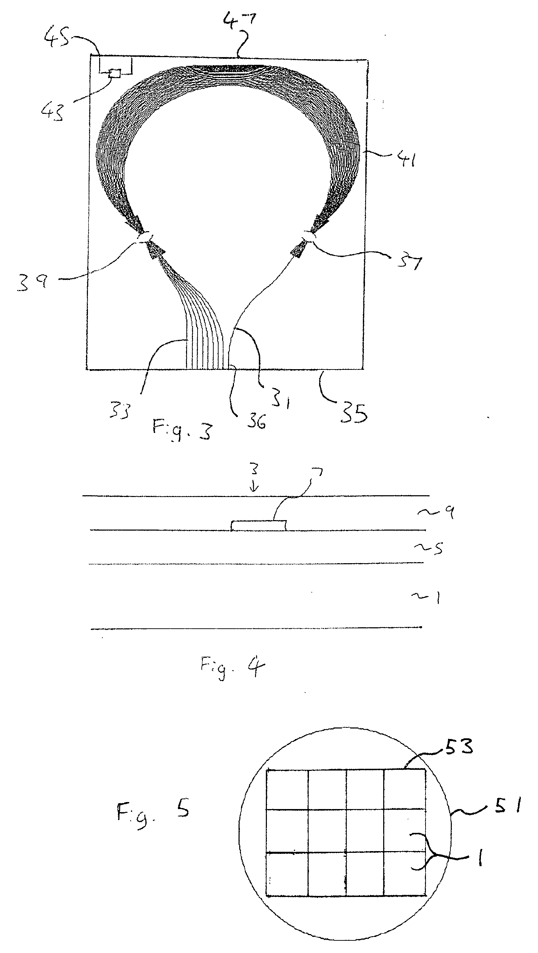

Referring to Figures 3 to 5, an arrayed waveguide grating (AWG) according to an embodiment of the invention provides a plurality of optical waveguides 3 defined on a rectangular substrate 1. For example, to define the waveguides a buffer 5 may be deposited on the substrate, a core 7 deposited along part of the buffer to define the waveguide 3 and a cladding layer 9 provided to cover the core and buffer. The refractive indices of the buffer 5, core 7 and cladding 9 are selected so that light is guided along the waveguide in the region of the core. Thus, in the example the buffer and cladding have a refractive index n of 1.4464 and the core a refractive index of 1.4574. Since light travels partially in the core and partially in the buffer and cladding, light travelling down the waveguides experiences an effective refractive index, here around 1.452.

The waveguides defined on the substrate include an input waveguide 31 and an output waveguide 33 which connect to input 37 and output 39 star couplers. An array 41 of waveguides 3 extends between the input and the output star couplers. In this embodiment, the array includes twenty five waveguides arranged side by side with a pitch of 6 µm at the star couplers. Each waveguide is longer than the adjacent waveguide by 253 µm so that, given the effective refractive index of about 1.452, a FSR of 800 GHz is achieved.

The input and output waveguides 31,33 extend from the respective star couplers 37,39 to input and output ends 36 at adjacent positions on the same edge 35 of the substrate. This enables the input and output waveguides to be readily connected to optical fibers, by connecting correctly spaced optical fibers to the pair of waveguides in a single operation. In order that the input and output waveguides 31,33 can readily be brought together in this way, the array of waveguides is bent through more than 180° so that it is not necessary to bend the input and output waveguides through narrow radii to bring them together.

In the embodiment, the core 7 is 5µm wide and 7µm high. The pitch of input and outputs at the edge 35 of the substrate is 250µm, to match a particular fiber ribbon pitch. As will be appreciated, the pitch may be varied to suit different input and output connectors.

The separation of the waveguides 3 of the array 41 is 6µm at the star couplers 37, 39. The output waveguides have a slightly larger pitch, 12µm at the star couplers. The skilled person will appreciate that these dimensions may be varied as required.

The package which incorporates the AWG filter also includes a temperature sensor 43 connected to a plurality of electrical connections 45 arranged on the opposite edge 47 of the substrate to the edge 35 used to which the input and output optical waveguides 31, 33 are brought.

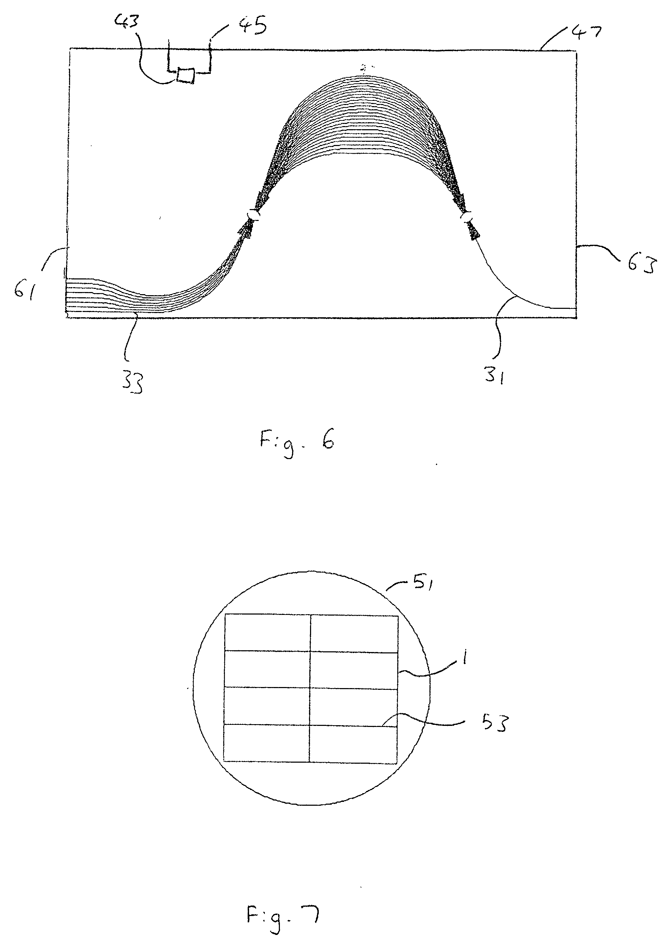

A plurality of such AWGs can be made on a single wafer 51 as illustrated in Figure 5, which shows 12 substrates 1 as shown in Figure 3 arranged on a wafer. Saw lines 53 separate the filter chips on the wafers. After fabrication, the wafer 51 is split along the saw lines 53 to form a plurality of separate AWGs on individual substrates 1.

For comparison, Figure 6 illustrates a conventional arrangement to produce the same AWG properties. In this arrangement, the input 31 and output 33 optical waveguides are brought to respective opposed edges 61,63. Electrical connections 45 are brought to an edge 47 adjacent to the opposed edges. The requirement to connect at three different edges makes integration of the AWG of Figure 6 more difficult; in particular it is necessary to make optical connections on each of the opposed edges 61, 63.

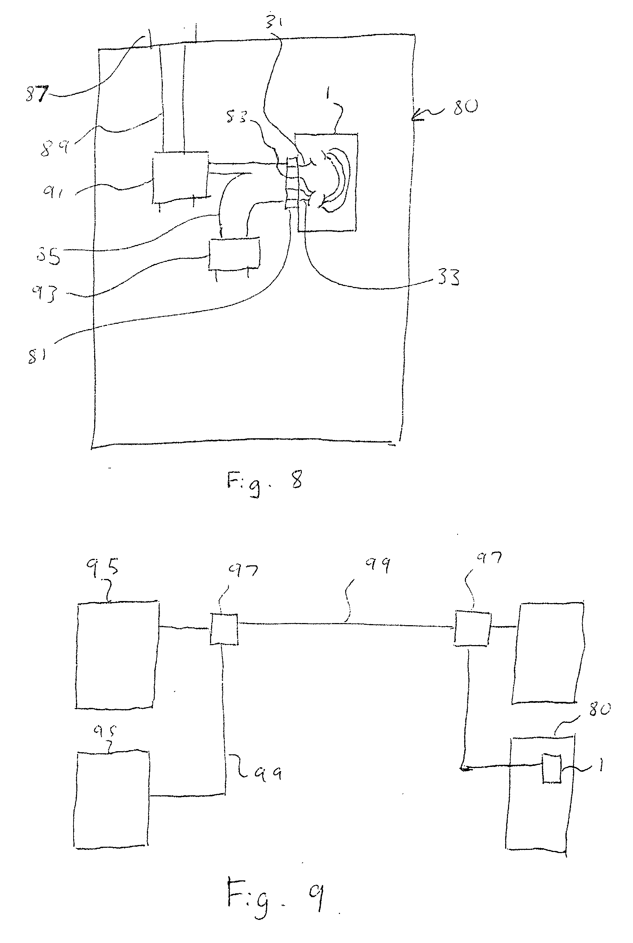

Moreover, as illustrated in Figure 7 only 8 of the AWGs according to Figure 6 fit onto a wafer of the same size as that shown in Figure 5. That is to say, the number of AWGs according to the invention that fit on a substrate is larger than the number of conventional AWGs with the same FSR. The size reduction using the invention increases with reducing FSR; above a threshold FSR there is no size advantage. The threshold will vary depending on the various parameters of the AWG. This is because for large FSR the optical length difference between adjacent waveguides of the AWG is too small to be able to loop the AWG round sufficiently to get both ends of the AWG to the same edge without difficulty.

Referring to Figure 8, an optical node 80 includes an input optical connector 87 connected via an input fiber 89 to a switch 91 which directs some of the light, for example input signals in a particular range of channels, through part of an optical fiber ribbon 85 to a connector 81 with a plurality of optical fibers arranged in registration with the input 31 and output waveguides 33 of an AWG as described above in which input and output waveguides are brought to a common edge. The output of the AWG is in the example taken through the optical fiber ribbon to an array of detectors 93 for further processing. The output may instead be taken to an alternative optical processing device.

Referring to Figure 9, an optical network includes a plurality of transmitters 95 connected by optical fibers 99 and optical switches 97 to a plurality of optical nodes 80. Some or all of the optical nodes may be as described with reference to Figure 8, including an AWG 1 in which input and output waveguides are brought to the same edge of the substrate. The skilled person will realise that the network may be implemented in a large number of ways.

The invention has been described with reference to a number of specific embodiments. However, the skilled person will realise that the embodiments are not limiting and that the invention may be implemented in a number of different ways.

The skilled person will appreciate that the AWG may, purely by way of example, be used to demultiplex a group of WDM channels into a plurality of separate output signals, one in each channel. Alternatively, the reciprocity of the device allows the device to also carry out the reverse process of multiplexing.

There are a number of alternative approaches for defining waveguides on a substrate and any of these may be used in an AWG according to the invention. The substrate need not be rectangular. The invention is not just applicable to conventional glass waveguides, but also to polymer waveguides.

Moreover, although the invention has been described with reference to "input" and "output" waveguides these may in practice be reversible. Accordingly, the terms "input" and "output" may be considered as nothing more than labels indicating opposite ends of the AWG.

In summary, an arrayed waveguide grating device has a substrate with an array of waveguides extending across the substrate between an input coupler and an output coupler. At least one input waveguide extends between an input end for coupling to an input signal and the input coupler and at least one output waveguide extends between an output end for coupling to an output signal and the output coupler. The input end or ends of the at least one input waveguide and the output end or ends of the at least one output waveguide are brought to the same edge of the substrate.

## Claims

1. An arrayed waveguide grating device comprising:
a substrate (1) having a plurality of edges;
an array (41) of waveguides (3) extending across the substrate between a first coupler (39) and
a second coupler (37);
at least one input/output waveguide (31) extending from the first coupler;
at least one input/output waveguide (33) extending from the second coupler;
wherein the opposite ends of the input/output waveguides to the first and second couplers are provided on a common edge of the substrate (35) to constitute optical inputs and outputs.

2. An arrayed waveguide grating according to claim 1 wherein the optical inputs and outputs connected to both the first and the second couplers are arranged contiguously along the common edge with a constant spacing.

3. An arrayed waveguide grating according to claim 1 or 2 wherein electrical connections (45) are provided on different edges of the substrate to the optical inputs and outputs.

4. An arrayed waveguide grating according to claim 3 wherein the electrical connections (45) are on an opposite edge (47) to the optical inputs and outputs.

5. An arrayed waveguide grating according to any of the preceding claims wherein the array of waveguides bends on the substrate by more than 180° .

6. An arrayed waveguide grating according to any of the preceding claims having a free spectral range of not more than 1000GHz.

7. A node of an optical telecommunications system comprising
an arrayed waveguide grating device comprising:
a substrate (1) having a plurality of edges;
an array (41) of waveguides (3) extending across the substrate between a first coupler (39) and
a second coupler (37);
at least one input/output waveguide (31) extending from the first coupler;
at least one input/output waveguide (33) extending from the second coupler;
wherein the opposite ends of the input/output waveguides to the first and second couplers are provided on a common edge (35) of the substrate to constitute optical inputs and outputs.

8. A node according to claim 7 wherein a plurality of the optical inputs and outputs are arranged with a constant spacing and at least one optical fiber ribbon with the same constant fiber spacing is connected in registration to the plurality of optical inputs and outputs.

9. An optical system comprising a plurality of nodes, at least one of the nodes including an optical node having an arrayed waveguide grating comprising:
a substrate (1) having a plurality of edges;
an array (41) of waveguides (3) extending across the substrate between a first coupler (39) and
a second coupler (37);
at least one input/output waveguide (31) extending from the first coupler;
at least one input/output waveguide (33) extending from the second coupler;
wherein the opposite ends of the input/output waveguides to the first and second couplers are provided on a common edge of the substrate (35) to constitute optical inputs and outputs.

10. A method of demultiplexing optical signals at a plurality of different frequencies, including:
inputting an optical signal to at least one optical input arranged on an edge of a substrate;
passing the optical signal through an arrayed waveguide grating on the substrate to split the optical signal according to wavelength into a plurality of demultiplexed signals passing along respective output waveguides; and
outputting the demultiplexed signals from the plurality of output waveguides through a plurality of optical outputs arranged along the same edge of the substrate as the at least one input.

11. A method of multiplexing optical signals at a plurality of different frequencies, including:
inputting a plurality of optical signals to a plurality of optical inputs arranged on an edge of a substrate;
passing the optical signals through an arrayed waveguide grating on the substrate to combine the optical signals according to wavelength into at least one multiplexed signal passing along at least one output waveguide; and
outputting the multiplexed signal from the respective output waveguides through at least one optical output arranged along the same edge of the substrate as the plurality of optical inputs.

12. A method of filtering an optical signal, including:
inputting at least one optical signal to at least one optical input arranged on an edge of a substrate;
passing the at least one optical signal through an arrayed waveguide grating on the substrate to filter the at least one optical signal according to wavelength into at least one filtered signal passing along at least one output waveguide; and
outputting the at least one filtered signal from the respective output waveguide through an optical output arranged along the same edge of the substrate as the at least one optical input.
